# EUROPEAN PATENT SPECIFICATION

(11) **EP 2 738 016 B1**
(45) Date of publication and mention of the grant of the patent: **10.05.2017**
(21) Application number: 12817559.3
(22) Date of filing: 27.07.2012
(51) Int. Cl.: B60C 3/04, B60C 11/03, B60C 11/04, B60C 11/12

(54) **PNEUMATIC RADIAL TIRE FOR A PASSENGER VEHICLE AND METHOD OF USING THE TIRE**
RADIALER LUFTREIFEN FÜR EIN PASSAGIERFAHRZEUG UND VERWENDUNGSVERFAHREN DAFÜR
PNEUMATIQUE RADIAL POUR VÉHICULE À PASSAGERS ET PROCÉDÉ D'UTILISATION DE CE PNEUMATIQUE

(30) Priority: 28.07.2011 JP 2011166041
(43) Date of publication of application: 04.06.2014
(73) Proprietor: Bridgestone Corporation, Tokyo 104-8340 (JP)
(72) Inventor: HATANAKA, Shintaro, Kodaira-shi Tokyo 187-8531 (JP); MATSUMOTO, Hiroyuki, Kodaira-shi Tokyo 187-8531 (JP); KUWAYAMA, Isao, Kodaira-shi Tokyo 187-8531 (JP); WATANABE, Jun, Kodaira-shi Tokyo 187-8531 (JP); HIURA, Shingo, Kodaira-shi Tokyo 187-8531 (JP)
(74) Representative: Oxley, Robin John George
(86) International application number: PCT/JP2012/004819
(87) International publication number: WO 2013/014949

(56) References cited:
- JP-A- 1 190 504
- JP-A- 8 164 709
- JP-A- 60 056 605
- JP-A- 2000 190 706
- US-A- 5 882 450

## Description

### TECHNICAL FIELD

The present invention relates to a pneumatic radial tire for a passenger vehicle and a method of using the tire.

### BACKGROUND ART

Bias tires having relatively narrower sectional widths had been predominantly used in vehicles until around 1960 because vehicles in those days were relatively lightweight, and the speed demanded for the vehicles were lower, resulting a less burden imposed on the tires. However, radial tires are predominant these days and those having larger widths and assuming flat shapes are particularly demanded due to increase in weight and speed of vehicles (see, for example, PTL 1).

However, the larger tire width sacrifices the vehicle space and thus will degrade the comfortability. Further, the larger tire widths increase air resistance and cause another problem of poor fuel consumption, despite the fact that there has been an increasing demand for lower fuel consumption along with increased interest in environmental issues.

In particular, electric vehicles, which are being developed for use in future, need to ensure a sufficient space for accommodating driving components such as a motor for controlling the torque for rotating tires around drive shafts. Ensuring a sufficient space around the tire is becoming increasingly important in this connection.

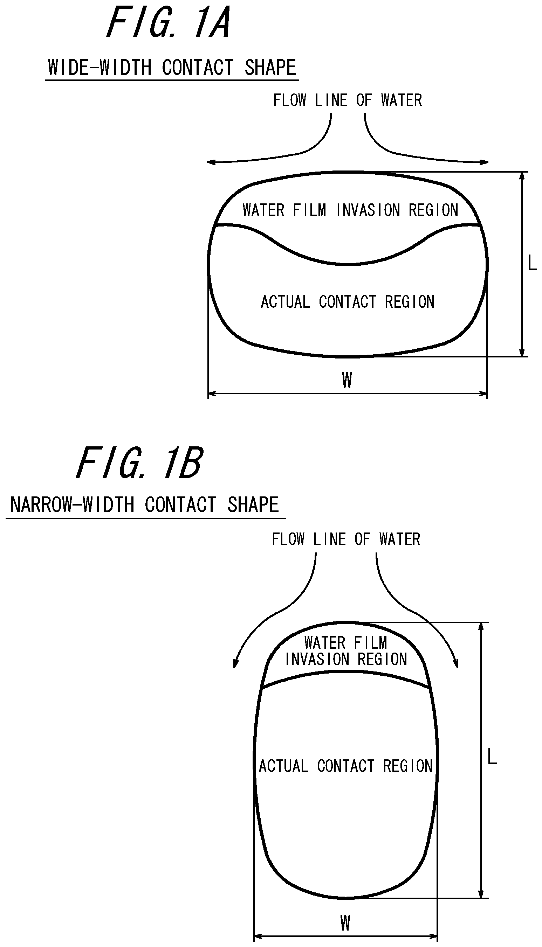

Further, the aforementioned wide-width flat-shaped tire has a treading surface having a wide width, which makes it difficult to laterally discharge water toward both sides during driving in rain, as illustrated in FIG. 1A schematically showing the flow line of the water by an arrow, which leads to poor drainage. Further, the wide-width flat-shaped tire has a small contact length L, which is likely to cause a so-called hydroplaning phenomenon in which, as illustrated in FIG. 1A, the tread surface is uplifted due to the water film entered from the treading surface, with the result that the actual contact area is reduced to lose grip, causing a problem to degrade wet performance.

In view of the above, particularly in a wide-width flat-shaped radial tire, it has been hitherto necessary to dispose, in the tread surface, a main groove that has a large sectional area and extends in the tread circumferential direction.

However, when disposing a main groove having a large groove depth, it is necessary to increase the thickness of the tread correspondingly to the large depth of the main groove, which causes a problem of increase in tire weight and deterioration in driving performance. Further, providing the main groove having a large groove width incurs an increase in negative ratio, which reduces a contact area, causing a problem of deterioration in grip force, that is, deterioration in driving stability and braking performance on a dry road surface, and further, degradation in wear resistance and noise performance.

Further, it is known to be effective to use, in a wide-width flat-shaped radial tire, tread rubber of a small hysteresis loss for the purpose of reducing rolling resistance so as to attain low fuel consumption. However, the use of rubber of a small hysteresis loss incurs a problem of impaired grip performance on a wet road surface.

### CITATION LIST

### Patent Literature

PTL 1: JP H7-40706 A
Reference is also made to JP 2000-190706, which discloses a pneumatic tire having reduced running resistance, in which the maximum tire width is in the range from 0.10 to 0.30 times the rim diameter.

### SUMMARY OF INVENTION

### (Technical Problem)

As described above, it is generally difficult obtain low fuel consumption of the tire, comfortability (space in the vehicle), the wet performance, the dry performance, and the snow performance in a compatible manner, and there has been a strong desire for a drastic technology capable of improving the performance altogether.

Thus, the present invention aims at solving the problems described above and an object thereof is to provide a pneumatic radial tire for a passenger vehicle and a method of using the tire, the tire being low in both air resistance value (Cd value) and the tire rolling resistance value (RR value) and capable of achieving low fuel consumption and ensuring a space in the vehicle, while having excellent driving performance on a dry road surface, a wet road surface, and on a snow road surface.

### (Solution to Problem)

The inventors of the present invention keenly studied to solve the aforementioned problems.

As a result, the inventors have found out that it is extremely effective to control the reduction in width and the increase in diameter of the tire, namely, to define the tire section width SW and the tire outer diameter OD so as to fall under an appropriate ratio.

Further, the inventors of the present invention have also obtained novel findings that the tread pattern may be optimized in the aforementioned tire with a smaller width and a larger diameter, which makes it possible to improve driving performance on a dry road surface, on a wet road surface, and even on a snow road surface in a compatible manner.

The present invention has been contrived based on the aforementioned discovery and main structural features are as follows.
(1) A pneumatic radial tire for a passenger vehicle, having a carcass constituted of plies as radially-disposed cords and toroidally provided across a pair of bead portions, and including a belt including one or more belt layers and a tread which are disposed in this order on the outside in the radial direction of the carcass, in which:
   the tread surface has one or more grooves formed thereon;
   the grooves each have a groove width of 3 mm or less; and
   provided that SW and OD each represent a section width and an outer diameter of the tire, respectively, SW and OD satisfy a ratio SW/OD≤0.26 when SW<165 (mm), and SW and OD satisfy a relationship formula OD≥2.135×SW+282.3 when SW≥165 (mm).
(2) The pneumatic radial tire for a passenger vehicle according to (1) above, in which the grooves have a total extension ρ of the grooves per unit area on the tread surface of 0.15 (mm/mm²) or more and 0.2 (mm/mm²) or less.
(3) The pneumatic radial tire for a passenger vehicle according to (1) or (2) above, in which
   provided that the tread surface is equally divided into six regions in the tread width direction, of which two regions in the center in the tread width direction are defined as center portions and the other four regions on both outsides of the center portions in the tread width direction are defined as shoulder portions, the grooves projected in the tread width direction in the center portions have a total extension pc of at least 0.1 (mm/mm²) per unit area in the center portion while the grooves projected in the tread circumferential direction in the shoulder portion have a total extension ps of at least 0.1 (mm/mm²) per unit area in the shoulder portion.
(4) The pneumatic radial tire for a passenger vehicle according to any one of (1) to (3) above, in which the ratio SW/OD is 0.24 or less.
(5) A method of using a pneumatic radial tire for a passenger vehicle, including using the pneumatic radial tire for a passenger vehicle according to any one of (1) to (4) above at an internal pressure of at least 250 kPa.

### (Advantageous Effect of Invention)

According to the present invention, it is possible to provide a pneumatic radial tire for a passenger vehicle and a method of using the tire, the tire being low in both air resistance value (Cd value) and the tire rolling resistance value (RR value) and capable of achieving low fuel consumption and ensuring a space in the vehicle, while having excellent driving performance on a dry road surface, a wet road surface, and a snow road surface.

### BRIEF DESCRIPTION OF DRAWINGS

The present invention will be further described below with reference to the accompanying drawings, wherein:
FIG. 1A is a view for illustrating the wet performance of a wide-width radial tire;
FIG. 1B is a view for illustrating the wet performance of a narrow-width radial tire;
FIG. 2 is a view showing a section width SW and an outer diameter OD of a tire;
FIG. 3A is a view showing a vehicle on which the tires increased in diameter and reduced in width of the present invention are mounted;
FIG. 3B is a view showing a vehicle on which conventional tires are mounted;
FIGS. 4A and 4B each are a graph showing a relation between SW and OD in Example Tires and Conventional Tires, respectively,
FIG. 5 is a graph showing a relation between the rolling resistance and the air resistance in each tire;
FIG. 6 is a development view illustrating part of a tread pattern of a tire according to an embodiment of the present invention;
FIG. 7 is a development view illustrating part of a tread pattern of a tire according to an embodiment of the present invention;
FIG. 8 is a development view illustrating part of a tread pattern of a tire according to an embodiment of the present invention;
FIG. 9 is a development view illustrating part of a tread pattern of a tire according to an embodiment of the present invention;
FIG. 10 is a development view illustrating part of a tread pattern of a tire according to an embodiment of the present invention;
FIG. 11 is a development view illustrating part of a tread pattern of a tire according to an embodiment of the present invention;
FIG. 12 is a view for illustrating a projected length of grooves;

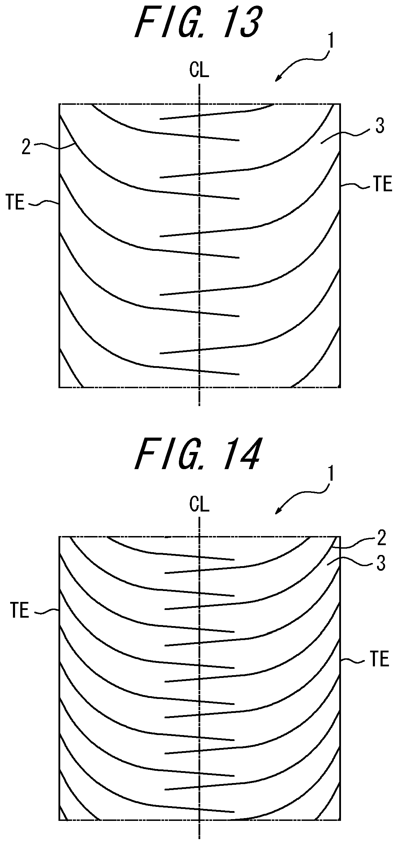

FIG. 13 is a development view illustrating a tread pattern;
FIG. 14 is a development view illustrating a tread pattern;

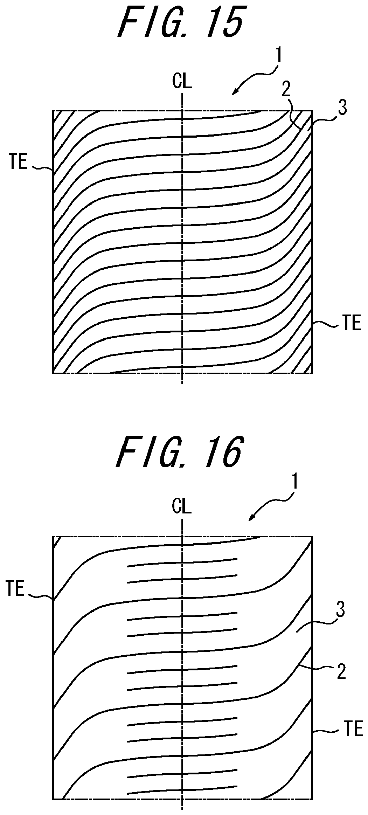

FIG. 15 is a development view illustrating a tread pattern;
FIG. 16 is a development view illustrating a tread pattern; and

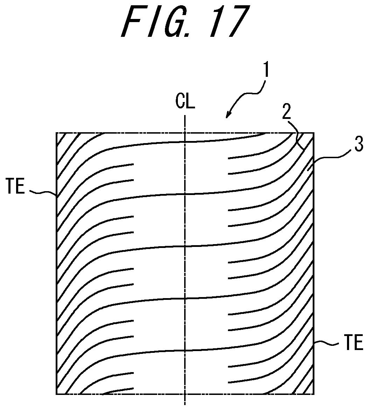

FIG. 17 is a development view illustrating a tread pattern.

### DESCRIPTION OF EMBODIMENTS

In the following, how a pneumatic radial tire for a passenger vehicle of the present invention (which tire will also be referred to simply as "tire" hereinafter) has been realized is described.

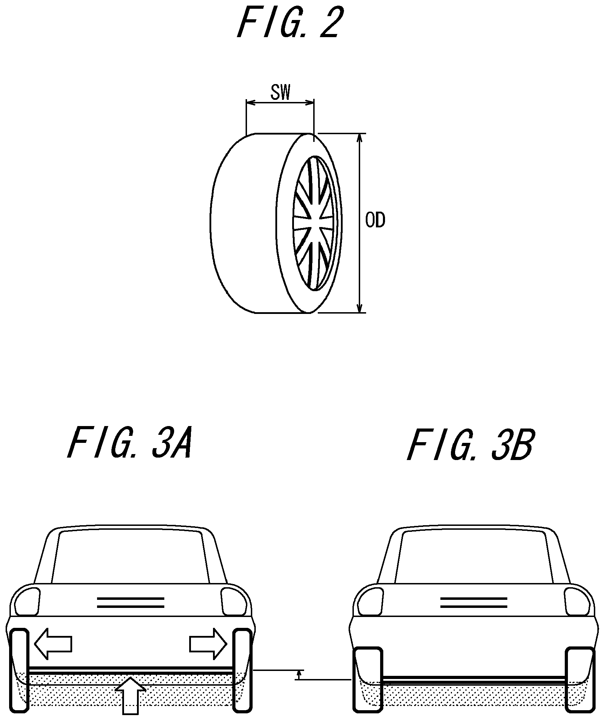

First, the inventors of the present invention turned their attention to the fact that narrowing the tire section width SW (see FIG. 2) of a radial tire as compared with a conventional tire allows a vehicle to ensure sufficient space therein, in particular, space for accommodating driving units in the vicinity, on the vehicle inner side, of the tire (see FIG. 3)

Further, narrowing the tire section width SW reduces an area of the tire viewed from the front (hereinafter, the area is referred to as frontal projected area), which produces an effect of reducing an air resistance value (Cd value) of the vehicle.

However, the contact portion suffers larger deformation, which leads to a problem of a larger rolling resistance value (RR value) under the same air pressure.

Meanwhile, the inventors discovered that the properties inherent to radial tires would solve the aforementioned problems. Specifically, the inventors turned their attention to the fact that radial tires are smaller in tread deformation as compared to bias tires, and thus the outer diameter OD of the radial tire can be increased than conventionally so as to be less susceptible to road surface roughness, which allows for reduction of the rolling resistance value (RR value) under the same air pressure. Further, the increase of the tire diameter also allows for improvement in the load capacity of the tire. Still further, as illustrated in FIGS. 3, the larger outer diameter of the radial tire increases the height of drive shafts, which enlarges under-chassis space, allowing the vehicle to ensure wide spaces for a car trunk, driving units and the like.

Here, the narrowed width and the increased outer diameter of the tire are both effective in ensuring free space in a vehicle, while having a tradeoff relation against the rolling resistance value (RR value). Further, the narrowed width of the tire allows for reduction of the air resistance value (Cd value) of the vehicle.

In view of the above, the inventors have made extensive study on optimizing the balance between the tire section width and the tire outer diameter so as to improve properties in relation to the air resistance value (Cd value) and the rolling resistance value (RR value) of the tire as compared to those of the conventional radial tires.

The inventors turned their attention to the relation between the tire section width SW and the tire outer diameter OD, and derived conditions to be satisfied by the SW and the OD of the tire when the properties in relation to the air resistance value (Cd value) and the rolling resistance value (RR) both became more excellent than those of the conventional radial tires, by testing the tires in the following manner. That is, tires in various sizes including those beyond the conventional sizes were each mounted onto a vehicle to measure the air resistance value (Cd value) and the rolling resistance value (RR value).

In the following, a detailed description is given of the experimental results which led to derivation of an optimal relation between SW and OD.

On the basis of the discoveries described above, the inventors of the present invention studied specific conditions under which both the air resistance value and the rolling resistance value can be reduced in a compatible manner by increasing outer diameter and narrowing width of the tire.

First, there was prepared as Reference tire 1 a tire with a size of 195/65R15, which tire is used in the most common types of vehicles and thus suitable for comparison of tire performances. Then, prepared as Reference Tire 2 was a tire with a size of 225/45R17, which is an inch larger than Reference Tire 1.

Further, tires in various sizes (Example Tires 1 to 52) were prepared, which were each assembled with a rim and subjected to the following tests.

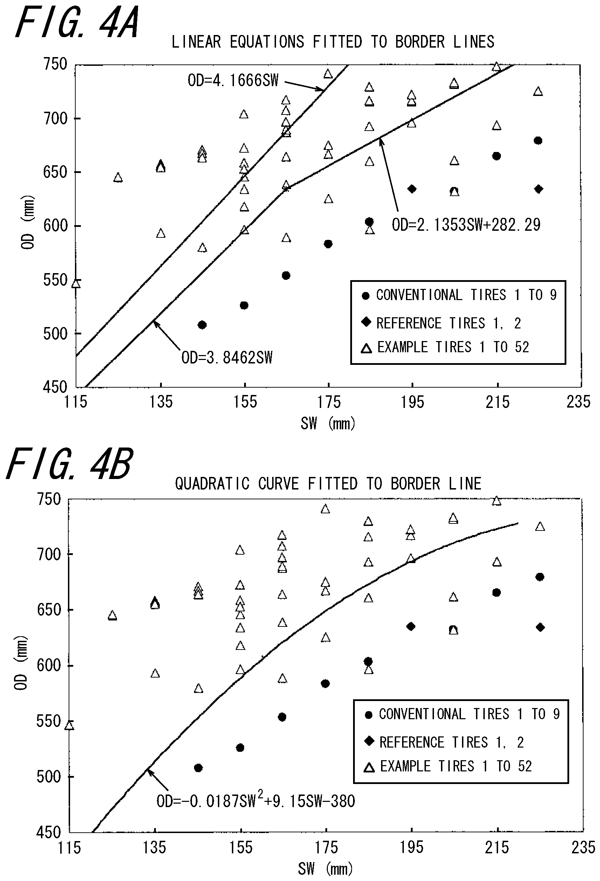

Table 1 and FIG. 4 show relevant specifications of the respective test tires. Other specifications of each tire than those shown in Table 1 (e.g. internal structures thereof) were the same as those of a tire commonly in use. Each of the test tires included a carcass constituted of plies as radially-disposed cords and toroidally provided across a pair of bead portions.

With regard to the tire size, a variety of tire sizes including the conventional sizes prescribed in JATMA, TRA, ETRTO and the like and those beyond these conventional sizes were widely studied.

**[Table 1-1]**

| | Tire Size | SW (mm) | OD (mm) | SW/OD |
|---|---|---|---|---|
| Conventional Tire 1 | 145/70R12 | 145 | 507.8 | 0.29 |
| Conventional Tire 2 | 155/55R14 | 155 | 526.1 | 0.29 |
| Conventional Tire 3 | 165/60R14 | 165 | 553.6 | 0.30 |
| Conventional Tire 4 | 175/65R14 | 175 | 583.1 | 0.30 |
| Conventional Tire 5 | 185/60R15 | 185 | 603 | 0.31 |
| Conventional Tire 6 | 205/55R16 | 205 | 631.9 | 0.32 |
| Conventional Tire 7 | 215/60R16 | 215 | 664.4 | 0.32 |
| Conventional Tire 8 | 225/55R17 | 225 | 679.3 | 0.33 |
| Conventional Tire 9 | 245/45R18 | 245 | 677.7 | 0.36 |
| Reference Tire 1 | 195/65R15 | 195 | 634.5 | 0.31 |
| Reference Tire 2 | 225/45R17 | 225 | 634.3 | 0.35 |
| Example Tire 1 | 155/55R21 | 155 | 704.5 | 0.22 |
| Example Tire 2 | 165/55R21 | 165 | 717.4 | 0.23 |
| Example Tire 3 | 155/55R19 | 155 | 653.1 | 0.24 |
| Example Tire 4 | 155/70R17 | 155 | 645.8 | 0.24 |
| Example Tire 5 | 165/55R20 | 165 | 689.5 | 0.24 |
| Example Tire 6 | 165/65R19 | 165 | 697.1 | 0.24 |
| Example Tire 7 | 165/70R18 | 165 | 687.5 | 0.24 |
| Example Tire 8 | 165/55R16 | 165 | 589.3 | 0.28 |
| Example Tire 9 | 175/65R15 | 175 | 625.0 | 0.28 |
| Example Tire 10 | 185/60R17 | 185 | 660.7 | 0.28 |
| Example Tire 11 | 195/65R17 | 195 | 696.4 | 0.28 |
| Example Tire 12 | 205/60R18 | 205 | 732.1 | 0.28 |
| Example Tire 13 | 185/50R16 | 185 | 596.8 | 0.31 |
| Example Tire 14 | 205/60R16 | 205 | 661.3 | 0.31 |
| Example Tire 15 | 215/60R17 | 215 | 693.5 | 0.31 |
| Example Tire 16 | 225/65R17 | 225 | 725.8 | 0.31 |
| Example Tire 17 | 155/45R21 | 155 | 672.9 | 0.23 |
| Example Tire 18 | 205/55R16 | 205 | 631.9 | 0.32 |
| Example Tire 19 | 165/65R19 | 165 | 697.1 | 0.24 |
| Example Tire 20 | 155/65R18 | 155 | 658.7 | 0.24 |

**[Table 1-2]**

| | Tire Size | SW (mm) | OD (mm) | SW/OD |
|---|---|---|---|---|
| Example Tire 21 | 145/65R19 | 145 | 671.1 | 0.22 |
| Example Tire 22 | 135/65R19 | 135 | 658.1 | 0.21 |
| Example Tire 23 | 125/65R19 | 125 | 645.1 | 0.19 |
| Example Tire 24 | 175/55R22 | 175 | 751.3 | 0.23 |
| Example Tire 25 | 165/55R20 | 165 | 689.5 | 0.24 |
| Example Tire 26 | 155/55R19 | 155 | 653.1 | 0.24 |
| Example Tire 27 | 145/55R20 | 145 | 667.5 | 0.22 |
| Example Tire 28 | 135/55R20 | 135 | 656.5 | 0.21 |
| Example Tire 29 | 125/55R20 | 125 | 645.5 | 0.19 |
| Example Tire 30 | 175/45R23 | 175 | 741.7 | 0.24 |
| Example Tire 31 | 165/45R22 | 165 | 707.3 | 0.23 |
| Example Tire 32 | 155/45R21 | 155 | 672.9 | 0.23 |
| Example Tire 33 | 145/45R21 | 145 | 663.9 | 0.22 |
| Example Tire 34 | 135/45R21 | 135 | 654.9 | 0.21 |
| Example Tire 35 | 145/60R16 | 145 | 580.4 | 0.25 |
| Example Tire 36 | 155/60R17 | 155 | 617.8 | 0.25 |
| Example Tire 37 | 165/55R19 | 165 | 664.1 | 0.25 |
| Example Tire 38 | 155/45R18 | 155 | 596.7 | 0.26 |
| Example Tire 39 | 165/55R18 | 165 | 638.7 | 0.26 |
| Example Tire 40 | 175/55R19 | 175 | 675.1 | 0.26 |
| Example Tire 41 | 115/50R17 | 115 | 546.8 | 0.21 |
| Example Tire 42 | 105/50R16 | 105 | 511.4 | 0.21 |
| Example Tire 43 | 135/60R17 | 135 | 593.8 | 0.23 |
| Example Tire 44 | 185/60R20 | 185 | 730 | 0.25 |
| Example Tire 45 | 185/50R20 | 185 | 693.0 | 0.27 |
| Example Tire 46 | 195/60R19 | 195 | 716.6 | 0.27 |
| Example Tire 47 | 175/60R18 | 175 | 667.2 | 0.26 |
| Example Tire 48 | 195/55R20 | 195 | 722.5 | 0.27 |
| Example Tire 49 | 215/50R21 | 215 | 748.4 | 0.29 |
| Example Tire 50 | 205/55R20 | 205 | 733.5 | 0.28 |
| Example Tire 51 | 185/45R22 | 185 | 716.3 | 0.26 |
| Example Tire 52 | 155/65R13 | 155 | 634.3 | 0.29 |

### <Air Resistance Value>

In a laboratory, each of the aforementioned test tires with the tire internal pressures of those in Table 2 was mounted to a vehicle with a displacement of 1500 cc, and then the vehicle was blown with air at a rate corresponding to 100 km/h so as to measure an aerodynamic force with the use of a scale placed on a floor below the wheel, to thereby measure air resistance. The evaluation results are shown as index values relative to "100" of Reference Tire 1. The smaller index value represents the air resistance.

### <Rolling Resistance Value>

Rolling resistance was measured by: assembling each of the aforementioned test tires with a rim to obtain a tire-rim assembly; applying, on the tire-rim assembly, the maximum load prescribed for a vehicle on which the tire is mounted; and running the tire at drum rotation speed of 100 km/h.

Here, the "maximum load prescribed for a vehicle on which the tire is mounted" represents the largest load value among respective four load values exerted on the four tires of the passenger vehicle when the prescribed upper limit number of occupants ride in the passenger vehicle.

The evaluation results are shown as index values relative to "100" of Reference Tire 1. The smaller index value represents the smaller rolling resistance.

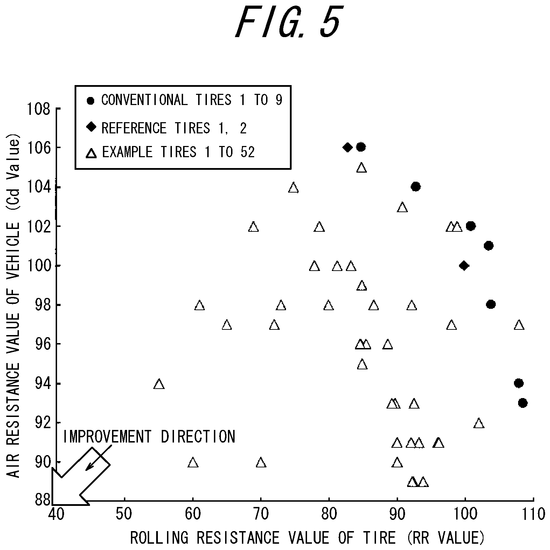

The evaluation results of air resistance and rolling resistance are shown in Tables 2, and FIGS. 4 and 5. In FIG. 4, tires that saw sufficient effects of reducing rolling resistance and air resistance are rendered as white marks, while tires insufficient in those effects are rendered as black marks.

The relevant specifications of the tires and the evaluation results are shown in Table 4 below.

**[Table 2-1]**

| | Tire Size | Internal Pressure (kPa) | RR Value (INDEX) | Cd Value (INDEX) |
|---|---|---|---|---|
| Conventional Tire 1 | 145/70R12 | 295 | 108 | 94 |
| Conventional Tire 2 | 155/55R14 | 275 | 111.3 | 91 |
| Conventional Tire 3 | 165/60R14 | 260 | 108.6 | 93 |
| Conventional Tire 4 | 175/65R14 | 245 | 103.6 | 101 |
| Conventional Tire 5 | 185/60R15 | 230 | 103.9 | 98 |
| Conventional Tire 6 | 205/55R16 | 220 | 101 | 102 |
| Conventional Tire 7 | 215/60R16 | 220 | 93 | 104 |
| Conventional Tire 8 | 225/55R17 | 220 | 85 | 106 |
| Conventional Tire 9 | 245/45R18 | 220 | 80 | 111 |
| Reference Tire 1 | 195/65R15 | 220 | 100 | 100 |
| Reference Tire 2 | 225/45R17 | 220 | 83 | 106 |
| Example Tire 1 | 155/55R21 | 220 | 60 | 90 |
| Example Tire 2 | 165/55R21 | 220 | 55 | 94 |
| Example Tire 3 | 155/55R19 | 220 | 90 | 90 |
| Example Tire 4 | 155/70R17 | 220 | 85 | 95 |
| Example Tire 5 | 165/55R20 | 220 | 72 | 97 |
| Example Tire 6 | 165/65R19 | 220 | 65 | 97 |
| Example Tire 7 | 165/70R18 | 220 | 61 | 98 |
| Example Tire 8 | 165/55R16 | 220 | 102 | 92 |
| Example Tire 9 | 175/65R15 | 220 | 98 | 97 |
| Example Tire 10 | 185/60R17 | 220 | 85 | 99 |
| Example Tire 11 | 195/65R17 | 220 | 78 | 100 |
| Example Tire 12 | 205/60R18 | 220 | 69 | 102 |
| Example Tire 13 | 185/50R16 | 220 | 108 | 97 |
| Example Tire 14 | 205/60R16 | 220 | 98 | 102 |
| Example Tire 15 | 215/60R17 | 220 | 91 | 103 |
| Example Tire 16 | 225/65R17 | 220 | 85 | 105 |
| Example Tire 17 | 155/45R21 | 220 | 70 | 90 |
| Example Tire 18 | 205/55R16 | 220 | 99 | 102 |
| Example Tire 19 | 165/65R19 | 260 | 92.2 | 98 |
| Example Tire 20 | 155/65R18 | 275 | 96 | 91 |

**[Table 2-2]**

| | Tire Size | Internal Pressure (kPa) | RR Value (INDEX) | Cd Value (INDEX) |
|---|---|---|---|---|
| Example Tire 21 | 145/65R19 | 295 | 92.4 | 89 |
| Example Tire 22 | 135/65R19 | 315 | 91.6 | 87 |
| Example Tire 23 | 125/65R19 | 340 | 88.2 | 85 |
| Example Tire 24 | 175/55R22 | 345 | 84.8 | 96 |
| Example Tire 25 | 165/55R20 | 260 | 92.6 | 93 |
| Example Tire 26 | 155/55R19 | 275 | 96.2 | 91 |
| Example Tire 27 | 145/55R20 | 290 | 92.3 | 89 |
| Example Tire 28 | 135/55R20 | 310 | 92.4 | 87 |
| Example Tire 29 | 125/55R20 | 340 | 87.7 | 85 |
| Example Tire 30 | 175/45R23 | 250 | 85.5 | 96 |
| Example Tire 31 | 165/45R22 | 255 | 89.7 | 93 |
| Example Tire 32 | 155/45R21 | 270 | 93.2 | 91 |
| Example Tire 33 | 145/45R21 | 290 | 92.2 | 89 |
| Example Tire 34 | 135/45R21 | 310 | 92.1 | 87 |
| Example Tire 35 | 145/60R16 | 290 | 93.9 | 89 |
| Example Tire 36 | 155/60R17 | 270 | 92.1 | 91 |
| Example Tire 37 | 165/55R19 | 255 | 89.4 | 93 |
| Example Tire 38 | 155/45R18 | 270 | 92.1 | 91 |
| Example Tire 39 | 165/55R18 | 255 | 89.4 | 93 |
| Example Tire 40 | 175/55R19 | 250 | 88.7 | 96 |
| Example Tire 41 | 115/50R17 | 350 | 86.7 | 83 |
| Example Tire 42 | 105/50R16 | 350 | 94.1 | 80 |
| Example Tire 43 | 135/60R17 | 300 | 85.6 | 87 |
| Example Tire 44 | 185/60R20 | 270 | 73.0 | 98 |
| Example Tire 45 | 185/50R20 | 270 | 80.0 | 98 |
| Example Tire 46 | 195/60R19 | 258 | 81.3 | 100 |
| Example Tire 47 | 175/60R18 | 286 | 84.7 | 96 |
| Example Tire 48 | 195/55R20 | 277 | 83.3 | 100 |
| Example Tire 49 | 215/50R21 | 250 | 75.0 | 104 |
| Example Tire 50 | 205/55R20 | 263 | 78.7 | 102 |
| Example Tire 51 | 185/45R22 | 285 | 86.7 | 98 |
| Example Tire 52 | 155/65R13 | 220 | 90 | 91 |

According to the test results shown in Table 2, and FIGS. 4 and 5, the inventors have discovered the followings. In a radial tire with a size where SW/OD is 0.26 or less when the tire section width SW is 165 mm or less, while the section width SW and the outer diameter OD of the tire satisfy a relationship formula OD≥2.135×SW+282.3 (hereinafter, also referred to as "Relationship Formula 1 is satisfied") when SW is 165 mm or larger, the air resistance value (Cd value) and the rolling resistance value (RR value) of the vehicle are both reduced in a compatible manner as compared to Reference Tire 1 as a conventional tire in a tire size of 195/65R15.

FIG. 4A shows a boundary (linear equations fitted to the border line) separating tires having an effect of reducing both the rolling resistance value (RR value) of the tire and the air resistance value (Cd value) of the vehicle, from tires that have insufficient effects thereof; the border line represents OD=(1/0.26)×SW in a range of SW<165 mm; and the border line represents OD=2.135xSW+282.3 in a range of SW≥165.

Further, according to the test results shown in Table 2, and FIGS. 4B and FIG. 5, the inventors have discovered the followings. In radial tires with a size where the tire section width SW and the outer diameter OD of the tire satisfy a relationship formula OD≥-0.0187×SW²+9.15×SW-380 (hereinafter, also referred to as "Relationship Formula 2 is satisfied) at the tire internal pressure of at least 250 kPa, the air resistance value (Cd value) and the rolling resistance value (RR value) of the vehicle are both reduced in a compatible manner as compared to Reference Tire 1 as a conventional tire with a size of 195/65R15.

FIG. 4B shows a boundary (quadratic curve fitted to the border line) separating tires showing the effects of reducing both the rolling resistance value (RR value) of the tire and the air resistance value (Cd value) of the vehicle, from tires that are insufficient in those effects; the border line is a curve representing OD=-0.0187×SW²+9.15×SW-380.

The inventors have also found out that the aforementioned effects can easily be obtained in Example Tires 1 to 7 and 17 satisfying SW/OD≤0.24 as shown in Table 2, and FIGS. 4 and 5.

Next, Example Tires 1 to 18 in particular are subjected to the following tests in order to evaluate the fuel consumption and comfortability of the vehicle.

### <Actual Fuel Consumption>

The tires were tested by JOC8 mode running. The evaluation results are shown as index values relative to "100" of Reference Tire 1. The larger index value represents the more excellent fuel consumption.

### <Comfortability>

The tires were each mounted onto a vehicle having a width of 1.7 m, and the rear trunk width thereof was measured. The evaluation results are shown as index values relative to "100" obtained as the evaluation result for Reference Tire 1. The large index value represents the more excellent comfortability.

The test results are shown in Table 3 below.

**[Table 3]**

| | Relationship Formula (1) | Relationship Formula (2) | Actual Fuel Consumption | Comfortability |
|---|---|---|---|---|
| Example Tire 1 | satisfied | satisfied | 117 | 105 |
| Example Tire 2 | satisfied | satisfied | 119 | 104 |
| Example Tire 3 | satisfied | satisfied | 105 | 105 |
| Example Tire 4 | satisfied | satisfied | 107 | 105 |
| Example Tire 5 | satisfied | satisfied | 112 | 104 |
| Example Tire 6 | satisfied | satisfied | 114 | 104 |
| Example Tire 7 | satisfied | satisfied | 116 | 104 |
| Example Tire 8 | unsatisfied | unsatisfied | 100 | 104 |
| Example Tire 9 | unsatisfied | unsatisfied | 101 | 102 |
| Example Tire 10 | unsatisfied | unsatisfied | 106 | 101 |
| Example Tire 11 | unsatisfied | satisfied | 109 | 100 |
| Example Tire 12 | satisfied | satisfied | 112 | 99 |
| Example Tire 13 | unsatisfied | unsatisfied | 97 | 101 |
| Example Tire 14 | unsatisfied | unsatisfied | 101 | 99 |
| Example Tire 15 | unsatisfied | unsatisfied | 103 | 98 |
| Example Tire 16 | unsatisfied | unsatisfied | 106 | 97 |
| Example Tire 17 | satisfied | satisfied | 116 | 105 |
| Example Tire 18 | unsatisfied | unsatisfied | 99 | 99 |
| Reference Tire 1 | - | - | 100 | 100 |

As shown in Table 3, some of Example Tires failing to satisfy the relationship formula (1) above (see FIG. 4) were found to be deteriorated than Reference Tire 1 in at least one of fuel consumption and comfortability, while Example Tires 1 to 7, 12, and 17 satisfying the relationship formula (1) above (see FIG. 4) were all found to be more excellent than Reference Tire 1 in both fuel consumption and comfortability.

As a result of the tests performed as described above, the inventors have discovered that a pneumatic radial tire having a section width SW and an outer diameter OD satisfying the relationship formula (1) above is capable of reducing both the air resistance value of the vehicle and the rolling resistance value of the tire, and further, capable of improving fuel consumption while improving comfortability of the vehicle.

Next, description is given of a tread pattern of a pneumatic radial tire in which the section width SW and the outer diameter OD satisfy the relationship formula (1) above.

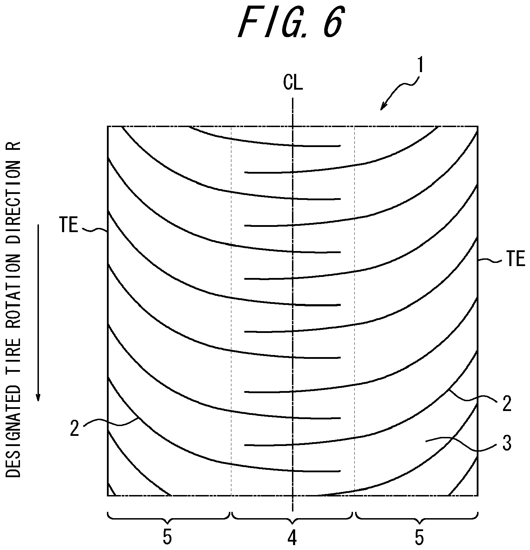

FIG. 6 is a development view illustrating a tread pattern of a radial tire for a passenger vehicle (hereinafter, referred to as tire) according to a first embodiment of the present invention. FIG. 6 is a development view of a tread of a tire without being in contact with ground.

As illustrated in FIG. 6, the tire according to a first embodiment has, on the tread surface 1 thereof, one or more grooves 2 extending in the tread width direction and a land portion 3 defined by the grooves 2 and the tread ends TE. All the grooves 2 each have a groove width of 3 mm or less. In other words, the tire has a groove pattern formed only of grooves each having a groove width of 3 mm or less.

Here, the groove width herein refers to a maximum groove width when the groove width varies in the extending direction of the groove.

Further, the tread surface refers to a surface region of a tread rubber, the region coming into contact with a flat plate when the tire assembled with an applicable rim and inflated at an internal pressure defined for each vehicle onto which the tire is to be mounted is vertically placed on the flat plate under a load of weight that corresponds to a maximum load prescribed for each vehicle onto which the tire is to be mounted.

In the present invention, the "applicable rim" refers to a rim prescribed in accordance with a tire by an industrial standard valid in the area where the tire is produced and used and examples of the industrial standard include: JATMA (The Japan Automobile Tyre Manufacturers Association, Inc.) YEAR BOOK in Japan; ETRTO (European Tyre and Rim Technical Organisation) STANDARD MANUAL in Europe; and TRA (THE TIRE and RIM ASSOCIATION INC.) YEAR BOOK in the United States. Further, the "maximum air pressure" is determined according to an applicable rim corresponding to the size of a radial ply tire and a table of air pressure vs. loading capacity prescribed by JATMA YEAR BOOK and the like. Still further, the "weight that corresponds to a maximum load" represents the maximum load allowed to be exerted on a single tire (the maximum loading capacity of a single tire) in an application size prescribed in the predetermined industrial standards described above.

Here, the tread surface 1 is equally divided into six regions in the tread width direction, of which two regions in the center in the tread width direction across the tire equator plane CL are referred to as center portions 4 and the other four regions on both outsides of the center portions 4 in the tread width direction are referred to as shoulder portions 5.

As illustrated in FIG. 6, the grooves 2 each extend inward in the tread width direction in a direction of a designated tire rotation direction R from one end (starting end) that opens at a tread end TE of one width-direction half portion of the tread surface 1, toward another tread end TE of the other width-direction half portion of the tread surface 1 across the tire equator plane CL. The other end (terminating end) of the groove 2 stays within the land portion 3 (center portion 4) of the other half portion of the tread surface 1.

Further, in the example of FIG. 6, the grooves 2 adjacent to each other in the tread circumferential direction are so disposed as to extend alternately from the opposite tread end TE across the tire equator plane CL as the border.

Further, in the first embodiment, as illustrated in FIG. 6, the grooves 2 are each so disposed as to assume a shape along the tread width direction as it extends inward in the tread width direction.

As described above, according to the present invention, it is essential that the section width SW and the outer diameter OD of the tire satisfy the above relationship formula (1), and that the tread surface 1 has one or more grooves formed thereon, the grooves each having a groove width of 3 mm or less.

Described in below is the operation and effect of the present invention in the case where the tire is mounted onto a vehicle with the direction R indicated by an arrow in FIG. 6 being the tire rotation direction.

According to the first embodiment of the present invention, first, SW and OD satisfy the above relationship formula (1), which means that the treading surface is small in width, and thus, water is likely to be discharged in the width direction both sides of the tire on a wet road surface, as illustrated in FIG. 1B schematically showing the flow line of the water by an arrow. Accordingly, even if all the grooves to be formed in the tread surface are small in groove width, the drainage performance can still be ensured and thus an actual contact area can be sufficiently ensured, with the result that wet braking performance is improved.

Further, the tire according to the first embodiment has only grooves being small in groove width on the tread surface, and thus has a low negative ratio. Further, the land portion has high rigidity, which prevents falling deformation of the land portion. Thus, as for the running on a dry road surface, the contact area can be ensured, which attains drivability, braking performance, and wear resistance.

Similarly, the contact area can be ensured even on a snow road surface, which improves snow traction performance and snow braking performance.

Therefore, according to the first embodiment, the low fuel consumption can be attained while ensuring a free space in the vehicle, and further, the driving performance can be ensured on a dry road surface, on a wet road surface, and on a snow road surface in a compatible manner.

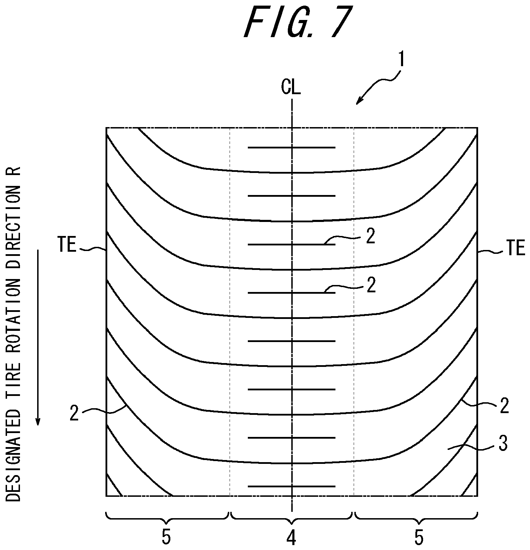

FIG. 7 is a development view illustrating a tread pattern of a tire according to a second embodiment of the present invention. As illustrated in FIG. 7, the tire has, on the tread surface 1 thereof, one or more grooves 2 extending in the tread width direction and a land portion 3 defined by the grooves 2 and the tread ends TE. All the grooves 2 disposed on the tread surface 1 each have a groove width of 3 mm or less.

Here, in the example illustrated in FIG. 7, the grooves 2 are symmetrically disposed across the tire equator plane CL at the center, and extend inward in the tread width direction in the designated tire rotation direction from the respective tread ends TE in the tread-width-direction-half portions across the tire equator plane CL as the boundary therebetween.

Further, as illustrated in FIG. 7, the grooves 2 are each so disposed as to assume a shape along the tread width direction as it extends inward in the tread width direction.

Again, as illustrated in FIG. 7, the tire according to the second embodiment has, in the center portions 4 of the tread surface 1, grooves 2 which extend in the tread width direction and stay within the center portions 4.

Described in below is the operation and effect of the present invention in the case where the tire according to the second embodiment is mounted onto a vehicle with the direction R indicated by an arrow in FIG. 7 being the tire rotation direction.

According to the second embodiment of the present invention, the tire has an operation and effect similar to that of the first embodiment, which makes it possible to attain the low fuel consumption while ensuring a free space in the vehicle, and further, to ensure the driving performance on a dry road surface, on a wet road surface, and on a snow road surface in a compatible manner.

Further, the tire according to the second embodiment has grooves extending in the width direction in the aforementioned center portions, and thus, the width-direction edge components are increased in the center portions which are larger in contact length, to thereby further improve dry performance and snow performance.

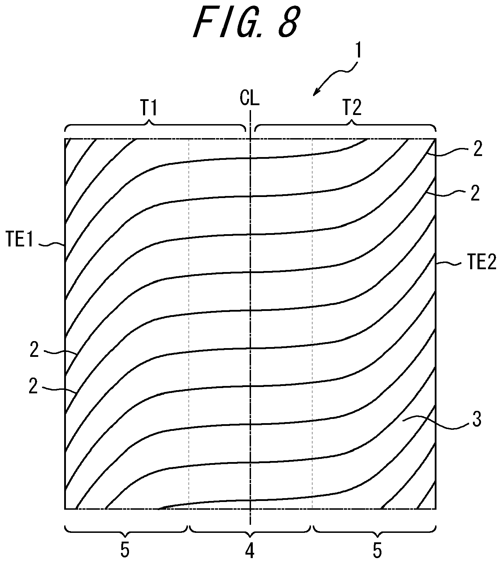

FIG. 8 is a development view illustrating a tread pattern of a tire according to a third embodiment of the present invention. As illustrated in FIG. 8, the tire according to the third embodiment has, on the tread surface 1 thereof, one or more grooves 2 extending in the tread width direction and a land portion 3 defined by the grooves 2 and the tread ends TE1 and TE2. The grooves 2 are asymmetrically disposed across the tire equator plane CL as a boundary. All the grooves 2 disposed on the tread surface 1 each have a groove width of 3 mm or less.

Here, one half portion of the tread surface across the tire equator plane CL as a boundary is referred to as T1 and the other half portion thereof is referred to as T2.

As illustrated in FIG. 8, the grooves 2 extend, in the one half portion T1, in the tread width direction from the tread end TE1 in one direction of the tread circumferential direction. Further, the grooves 2 extend, in the other half portion T2, in the tread width direction from the tread end TE2 in a direction opposite to the aforementioned one direction.

Further, as illustrated in FIG. 8, the grooves 2 are each so disposed, in the one half portion T1, as to assume a shape along the tread width direction as it extends inward in the tread width direction from the tread end TE1 to the tire equator plane CL. Further, in the other half portion T2, the grooves 2 are each so disposed as to assume a shape along the tread width direction as it extends inward in the tread width direction from the tread end TE2 to the tire equator plane CL.

Described in below is the operation and effect of the tire according to the third embodiment.

According to the third embodiment, the tire has an operation and effect similar to that of the first and second embodiments, which makes it possible to attain the low fuel consumption while ensuring a free space in the vehicle, and further, to ensure the driving performance on a dry road surface, on a wet road surface, and on a snow road surface in a compatible manner.

Further, according to the third embodiment, the tire has no designated tire rotation direction, which allows cross rotation to be performed on the tires installed inside and outside. As a result, partial wear resulting from imbalance of load applied on the right and left tires can be suppressed, leading to the increase in tire life.

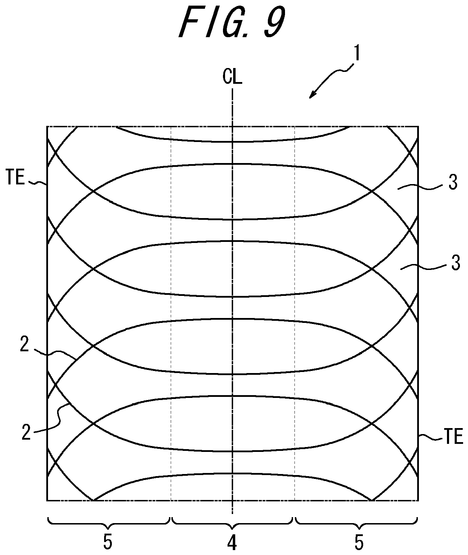

FIG. 9 is a development view illustrating a tread pattern of a tire according to a fourth embodiment of the present invention. As illustrated in FIG. 9, the tire has, on the tread surface 1 thereof, one or more grooves 2 extending in the tread width direction and a land portion 3 defined by the grooves 2 and the tread ends TE. All the grooves 2 disposed on the tread surface 1 each have a groove width of 3 mm or less.

Further, in the example illustrated in FIG. 9, the grooves 2 are symmetrically disposed across the tire equator plane CL at the center. In the tread-width-direction-half portions across the tire equator plane CL as the boundary therebetween, the grooves 2 extending inward in the tread width direction from the tread end TE in one direction of the tread circumferential direction and the grooves 2 extending inward in the tread width direction from the tread end TE in a direction opposite to the aforementioned one direction are alternately arranged in the tread circumferential direction. Here, in the example of FIG. 9, the grooves 2 intersect one another.

Further, as illustrated in FIG. 9, the grooves 2 are each so disposed, in the respective tread half portions, as to assume a shape along the tread width direction as it extends inward in the tread width direction from the respective tread ends TE.

Described in below is the operation and effect to be obtained when the tire according to the fourth embodiment is mounted on a vehicle.

According to the fourth embodiment of the present invention, the tire has an operation and effect similar to that of the first embodiment, which makes it possible to attain the low fuel consumption while ensuring a free space in the vehicle, and further, to ensure the driving performance on a dry road surface, on a wet road surface, and on a snow road surface in a compatible manner.

Further, according to the fourth embodiment, the grooves intersect one another to be connected to one another, which increases drainage performance, and particularly improves wet performance.

Further, the tire has no designated tire rotation direction, which allows cross rotation to be performed on the tires installed inside and outside. As a result, partial wear resulting from imbalance of load applied on the right and left tires can be suppressed, leading to the increase in tire life.

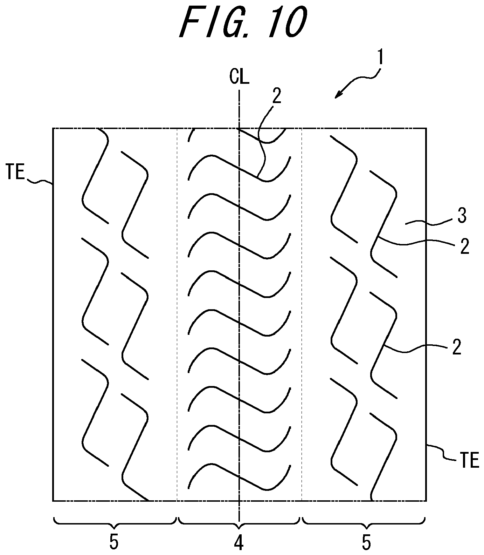

FIG. 10 is a development view illustrating a tread pattern of a tire according to a fifth embodiment of the present invention. As illustrated in FIG. 10, the tire has, on the tread surface 1 thereof, a plurality of grooves 2 and a land portion 3 defined by the grooves 2 and the tread ends TE. All the grooves 2 disposed on the tread surface 1 each have a groove width of 3 mm or less.

Here, in the example illustrated in FIG. 10, the grooves 2 disposed on the center portion 4 of the tread surface 1 extend in the tread width direction, while the grooves 2 disposed on the respective shoulder portions 5 extend in the tread circumferential direction.

Described in below is the operation and effect to be obtained when the tire according to the fifth embodiment is mounted on a vehicle.

According to the fifth embodiment of the present invention, the tire has an operation and effect similar to that of the first embodiment, which makes it possible to attain the low fuel consumption while ensuring a free space in the vehicle, and further, to ensure the driving performance on a dry road surface, on a wet road surface, and on a snow road surface in a compatible manner.

Further, according to the fifth embodiment, the grooves extend in the tread width direction in the aforementioned center portions, which can ensure the width-direction edge components, and thus, the tire is high in on-ice braking performance. In addition, the grooves extend in the tread circumferential direction in the aforementioned shoulder portions, which can ensure the width-direction edge components, and thus, the tire is high in on-ice turning performance. The tire is also high in drainage performance in vehicle turning.

Therefore, the fifth embodiment can further improve, in particular, wet turning performance, as well as dry performance and on ice performance.

Further, the tire has no designated tire rotation direction, which allows cross rotation to be performed on the tires installed inside and outside. As a result, partial wear resulting from imbalance of load applied on the right and left tires can be suppressed, leading to the increase in tire life.

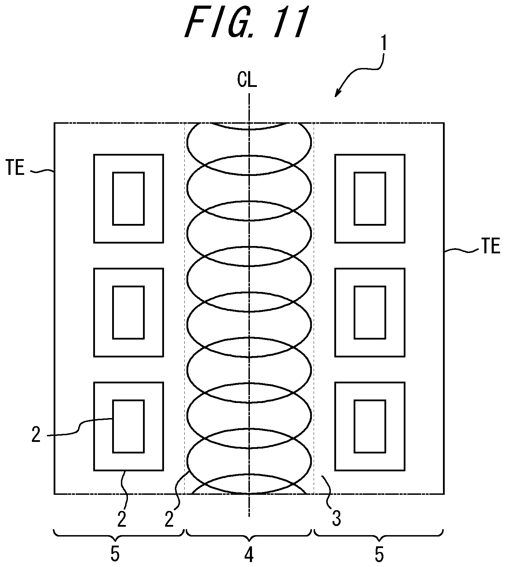

FIG. 11 is a development view illustrating a tread pattern of a tire according to a sixth embodiment of the present invention. As illustrated in FIG. 11, the tire has, on the tread surface 1 thereof, a plurality of grooves 2 and a land portion 3 defined by the grooves 2 and the tread ends TE. All the grooves 2 disposed on the tread surface 1 each have a groove width of 3 mm or less.

Here, in the example illustrated in FIG. 11, the grooves 2 are symmetrically disposed across the tire equator plane CL as a boundary.

In the aforementioned center portions of the tread surface 1, the grooves 2 each are ellipsoidal in shape, and the ellipsoidal grooves adjacent to each other in the tread circumferential direction intersect each other. Further, in the aforementioned shoulder portions, the grooves 2 each in a shape forming four sides of a rectangle.

Described in below is the operation and effect to be obtained when the tire according to the sixth embodiment is mounted on a vehicle.

According to the sixth embodiment of the present invention, the tire has an operation and effect similar to that of the first embodiment, which makes it possible to attain the low fuel consumption while ensuring a free space in the vehicle, and further, to ensure the driving performance on a dry road surface, on a wet road surface, and on a snow road surface in a compatible manner.

Further, according to the sixth embodiment, the tire has no designated tire rotation direction, which allows cross rotation to be performed on the tires installed inside and outside. As a result, partial wear resulting from imbalance of load applied on the right and left tires can be suppressed, leading to the increase in tire life.

Here, the extending length (length along the extending direction) of all the grooves disposed in the tread surface 1 is divided by the area of the tread surface 1, and the result thus obtained is defined as "total extension ρ of grooves per unit area on the tread surface".

At this time, the total extension ρ of the grooves 2 per unit area on the tread surface 1 is preferably at least 0.15 (mm/mm²). The reason is to further improve drainage performance.

On the other hand, the total extension ρ of the grooves 2 per unit area on the tread surface 1 is preferably 0.2 (mm/mm²) or less. The reason is to ensure the rigidity of the land portion, to thereby further improve driving performance on a dry road surface and a snow road surface.

Further, it is preferred that the total extension ρc of grooves projected in the tread width direction per unit area in the aforementioned center portion is at least 0.1 (mm/mm²) while the total extension ρs of grooves projected in the tread circumferential direction per unit area in the aforementioned shoulder portion is at least 0.1 (mm/mm²).

The reasons are as follows. The total extension ρc of grooves projected in the tread width direction per unit area in the aforementioned center portion that is defined to be at least 0.1 (mm/mm²) is capable of increasing the width-direction edge components, which improves braking performance by enhancing the scratching effect on ice or on a compressed snow road and suppressing intrusion of a water film into a contact surface on a wet road surface.

Further, the total extension ρs of grooves projected in the tread circumferential direction per unit area in the aforementioned shoulder portion that is defined to be at least 0.1 (mm/mm²) is capable of increasing the circumferential-direction edge components, which improves turning performance by enhancing the scratching effect on ice or on a compressed snow road.

Further, it is preferred that the total extension pc of grooves projected in the tread width direction per unit area in the aforementioned center portion is 0.2 (mm/mm²) or less while the total extension ps of grooves projected in the tread circumferential direction per unit area in the aforementioned center portion is at least 0.2 (mm/mm²) or less.

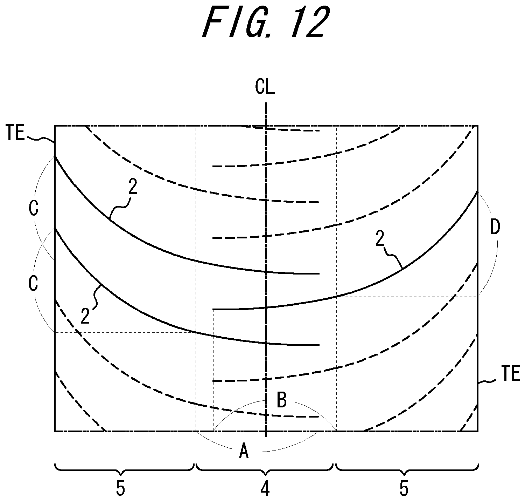

Here, "the total extension of grooves projected in the tread width direction" also refers to, as illustrated in FIG. 12, the projection length of "2A+B" that includes overlapping portions, when a plurality of grooves are disposed (FIG. 12 particularly illustrates three grooves). Further, "the total extension of grooves projected in the tread circumferential direction" also refers to, as illustrated in FIG. 12, the projection length of "2C+D" that includes overlapping portions, when a plurality of grooves are disposed (FIG. 12 particularly illustrates three grooves).

Meanwhile, "the total extension of grooves projected in the tread width direction" defined as above is obtained for the grooves disposed in the center portion, and the result thus obtained is divided by the area of the center portion, to thereby obtain "the total extension pc of grooves projected in the tread width direction per unit area in the center portion".

Further, "the total extension of grooves projected in the tread circumferential direction" defined as above is obtained for the grooves disposed in the shoulder portion, and the result thus obtained is divided by the area of the shoulder portion, to thereby obtain "the total extension ps of grooves projected in the tread circumferential direction per unit area in the shoulder portion".

In addition, the tire of the present invention is preferably used at an internal pressure of at least 250 kPa.

The reason is that the high internal pressure can increase the belt tension, which can improve, along with the increase in contact pressure, hydroplaning performance.

Further, the tire is preferably used at an internal pressure of 350 kPa or less.

Here, the tire of the present invention preferably has an air volume of at least 15000 cm³, which is necessary to retain a minimum load capacity of the tire.

Here, the tire according to the present invention is preferably provided with a recess in the outer portion of the tread surface for winding an antiskid chain for winter season.

Further, the tire according the present invention is preferably provided with a tread wear indicator (protrusion in a groove) on the tire circumference, as stipulated by the law.

According to the present invention, the grooves disposed on the tread surface each may have a groove depth of, for example, 4 mm to 6 mm.

Further, according to the present invention, the negative ratio may preferably be about 5 % to 20 %.

### EXAMPLES

In order to ascertain the effect of the present invention, tires according to Inventive Examples 1, 2, 3, 4 were prototyped while tires according to Conventional Examples 1, 2 were prepared.

Each tire was subjected to the following tests to evaluate the tire performance.

### <Wet Braking Performance>

Vehicles mounted with the aforementioned tires were each driven on a wet road surface at an initial speed of 40 km/h, and the stopping distance (mm) at full brake was indexed for evaluation.

In the evaluation, the distances are shown as index values relative to "100" of the performance of a tire according to Conventional Example 1. The larger index value represents the more excellent performance.

### <Drivability>

The aforementioned tires were each driven on a test course that includes a round track including a long straight course and a handling evaluation road with many gentle curves at a speed ranging from a low speed to 150 km/h, and the driveability was feeling evaluated on a scale of one to ten by the driver. The larger number indicates the more excellent performance.

### <Wear Resistance>

The remaining amount of grooves after driving of 100,000 kilometers was measured so as to calculate the wear amount. A wear resistance was evaluated as index values relative to "100" of the wear resistance evaluated for a tire according to Conventional Example 1. The larger value indicates the more excellent wear resistance.

### <Snow Traction Performance>

To evaluate the traction performance on snow, a tire was fully accelerated on compressed snow and the length of time before the tire reaches a distance of 50 m was measured, to thereby make the evaluation based on the time thus measured. The performance was evaluated as index value relative to '100' as the evaluation result obtained for a tire according to Conventional Example 1. The larger value indicates the more excellent snow traction performance.

### <Snow Braking Performance>

To evaluate the braking performance on snow, a braking distance on compressed snow from 40 km/h to ABS full braking was measured, to thereby make the evaluation based on the distance thus measured. The performance was evaluated as index value relative to '100' as the evaluation result obtained for a tire according to Conventional Example 1. The larger value indicates the more excellent snow braking performance.

### <Tire Weight>

The tire weight was measured. The tire weight was evaluated as index value relative to "100" as the evaluation result obtained for a tire according to Conventional Example 1. The smaller value indicates that the tire is lighter in weight.

**[Table 4]**

| | Inventive Example 1 | Inventive Example 2 | Inventive Example 3 | Inventive Example 4 | Conventional Example 1 | Conventional Example 2 |
|---|---|---|---|---|---|---|
| Tire Size | 155/55R19 | 155/55R19 | 155/45R18 | 195/55R20 | 205/55R16 | 205/55R16 |
| Relationship Formula (1) | satisfied | satisfied | satisfied | satisfied | unsatisfied | unsatisfied |
| Relationship Formula (2) | satisfied | satisfied | satisfied | satisfied | unsatisfied | unsatisfied |
| SW/OD | 0.24 | 0.24 | 0.26 | 0.27 | 0.32 | 0.32 |
| Tread Pattern (FIG.) | FIG. 6 | FIG. 6 | FIG. 6 | FIG. 6 | FIG. 6 | FIG. 6 |
| Groove Depth (mm) | 8 | 5 | 8 | 8 | 8 | 5 |
| Maximum Groove Width (mm) | 3 | 3 | 3 | 3 | 3 | 3 |
| Wet Braking Performance | 112 | 108 | 112 | 108 | 100 | 78 |
| Driveability | 8 | 8 | 8 | 8 | 7 | 6 |
| Wear Resistance | 118 | 63 | 117 | 120 | 100 | 53 |
| Snow Traction Performance | 107 | 110 | 106 | 107 | 100 | 105 |
| Snow Braking Performance | 106 | 112 | 106 | 106 | 100 | 104 |
| Tire Weight | 86 | 82 | 82 | 88 | 100 | 95 |

As shown in Table 4, the comparison of Inventive Examples 1, 2, 3, 4 with Conventional Examples 1, 2 shows that Inventive Examples 1, 2, 3, 4 in which SW and OD satisfy the above relationship formula (1) and all the grooves each have a groove width of 3 mm or less are each more excellent than Conventional Examples 1, 2 in wet braking performance, driveability, wear resistance, snow traction performance, and snow braking performance, while being lighter in tire weight.

Next, in order to investigate the effect of optimizing the total extension ρ of grooves per unit area on the tread surface, tires according to Inventive Examples 5 to 7 were prototyped, and tested for the aforementioned tire performances.

The relevant specifications of the tires and the evaluation results are shown in Table 5 below. In Table 5, the "groove density" refers to the total extension ρ of grooves per unit area on the tread surface. Further, in Table 5, the evaluation results are shown as relative values to 100 as the result obtained for Inventive Example 6.

**[Table 5]**

| | Inventive Example 5 | Inventive Example 6 | Inventive Example 7 |
|---|---|---|---|
| Tire Size | 155/55R19 | 155/55R19 | 155/55R19 |
| Relationship Formula (1) | satisfied | satisfied | satisfied |
| Relationship Formula (2) | satisfied | satisfied | satisfied |
| SW/OD | 0.24 | 0.24 | 0.24 |
| Tread Pattern (FIG.) | FIG. 13 | FIG. 6 | FIG. 14 |
| Groove Depth (mm) | 5 | 5 | 5 |
| Groove Width (mm) | 3 | 3 | 3 |
| Groove Density (mm/mm²) | 0.14 | 0.18 | 0.21 |
| Wet Braking Performance | 96 | 100 | 97 |
| Driveability | 102 | 100 | 95 |
| Wear Resistance | 99 | 100 | 96 |
| Snow Traction Performance | 95 | 100 | 98 |
| Snow Braking Performance | 93 | 100 | 98 |

As shown in Table 5, it can be appreciated that Inventive Example 6 in which the total extension ρ of grooves per unit area is optimized are more excellent than Inventive Example 5 in wet braking performance, and more excellent than Inventive Example 7 in dry performance and snow performance.

Next, in order to investigate the effect of optimizing the total extension ρc of grooves projected in the tread width direction per unit area on the center portion, and also to investigate the effect of optimizing the total extension ρs of grooves projected in the tread circumferential direction per unit area on the shoulder portions, tires according to Inventive Examples 8 to 10 were prototyped, and tested for the aforementioned tire performances.

The relevant specifications of the tires and the evaluation results are shown in Table 6 below. In Table 6, the evaluation results are shown as relative values to 100 as the result obtained for Inventive Example 8.

**[Table 6]**

| | Inventive Example 8 | Inventive Example 9 | Inventive Example 10 |
|---|---|---|---|
| Tire Size | 155/55R19 | 155/55R19 | 155/55R19 |
| SW/OD | 0.24 | 0.24 | 0.24 |
| Tread Pattern (FIG.) | FIG. 15 | FIG. 16 | FIG. 17 |
| Groove Depth (mm) | 5 | 5 | 5 |
| Groove Width (mm) | 3 | 3 | 3 |
| ρc (mm/mm²) | 0.21 | 0.21 | 0.07 |
| ρs (mm/mm²) | 0.24 | 0.08 | 0.24 |
| Wet Braking Performance | 100 | 98 | 95 |
| Driveability | 100 | 95 | 98 |
| Wear Resistance | 100 | 97 | 96 |
| Snow Traction Performance | 100 | 96 | 95 |
| Snow Braking Performance | 100 | 95 | 96 |

As shown in Table 6, Inventive Example 8, in which the aforementioned ρc was optimized, is more excellent than Inventive Examples 9, 10 in wet braking performance.

In addition, in order to investigate the effect of using the tire at high internal pressure, Example Tire 17 was varied in internal pressure thereof, and tested for tire performance.

The relevant specifications of the tires and the evaluation results are shown in Table 7 below. The evaluation results are indicated as relative values relative to the result obtained for the internal pressure of 250 kPa. The larger value represents the more excellent properties.

**[Table 7]**

| | Example Tire 17 | Example Tire 17 |
|---|---|---|
| Tread Pattern | FIG. 6 | FIG. 6 |
| Internal Pressure (kPa) | 220 | 250 |
| Rolling Resistance | 90 | 100 |
| Wet Braking Performance | 95 | 100 |

It can be appreciated from Table 7 that the use of a tire with an optimized internal pressure is capable of reducing the rolling resistance value while improving wet braking performance.

In addition, in order to investigate the effect of having the groove width of the tire defined to be 3 mm or less, Example Tire 17 was varied in groove width thereof, and tested for tire performance.

**[Table 8]**

| | Inventive Example 11 | Inventive Example 12 | Inventive Example 13 |
|---|---|---|---|
| Tire Size | 155/55R19 | 155/55R19 | 155/55R19 |
| SW/OD | 0.24 | 0.24 | 0.24 |
| Tread Pattern (FIG.) | Fig. 6 | FIG. 6 | FIG. 6 |
| Groove Depth (mm) | 5 | 5 | 5 |
| Groove Width (mm) | 2.5 | 3 | 3.5 |
| ρc (mm/mm²) | 0.21 | 0.21 | 0.21 |
| ρs (mm/mm²) | 0.24 | 0.24 | 0.24 |
| Wet Braking Performance | 99 | 100 | 96 |
| Driveability | 102 | 100 | 97 |
| Wear Resistance | 102 | 100 | 97 |
| Snow Traction Performance | 100 | 100 | 98 |
| Snow Braking Performance | 99 | 100 | 98 |

As shown in Table 8, it is found to be essential to define the groove width of the tire to be 3 mm or less in order to improve various performances of the tire.

### REFERENCE SIGNS LIST

- 1: tread surface
- 2: groove
- 3: land portion
- 4: center portion
- 5: shoulder portion

## Claims

1. A pneumatic radial tire for a passenger vehicle, including: carcass constituted of plies as radially-disposed cords and toroidally provided across a pair of bead portions; and a tread,
wherein the tread surface has one or more grooves formed thereon, wherein, provided that SW and OD each represent a section width and an outer diameter of the tire, respectively, SW and OD satisfy a ratio SW/OD≤0.26 when SW<165 (mm), and SW and OD satisfy a relationship formula OD≥2.135×SW+282.3 when SW≥165 (mm),
**characterized in that** the grooves each have a groove width of 3 mm or less.

2. The pneumatic radial tire for a passenger vehicle according to claim 1, wherein the grooves has a total extension ρ of the grooves per unit area on the tread surface of 0.15 (mm/mm²) or more and 0.2 (mm/mm²) or less.

3. The pneumatic radial tire for a passenger vehicle according to claim 1 or 2,
wherein, provided that the tread surface is equally divided into six regions in the tread width direction, of which two regions in the center in the tread width direction are defined as center portions and the other four regions on both outsides of the center portions in the tread width direction are defined as shoulder portions, the grooves projected in the tread width direction in the center portion have a total extension ρc of at least 0.1 (mm/mm²) per unit area in the center portion while the grooves projected in the tread circumferential direction in the respective shoulder portions have a total extension ρs of at least 0.1 (mm/mm²) per unit area in the shoulder portion.

4. The pneumatic radial tire for a passenger vehicle according to any one of claims 1 to 3, wherein the ratio SW/OD is 0.24 or less.

5. A method of using a pneumatic radial tire for a passenger vehicle, comprising using the pneumatic radial tire for a passenger vehicle according to any one of claims 1 to 4 at an internal pressure of at least 250 kPa.

## Patentansprüche

1. Radialluftreifen für einen Personenkraftwagen, Folgendes beinhaltend: eine Karkasse, die aus Lagen in Form radial angeordneter Kords besteht und toroidförmig quer zu einem Paar von Wulstabschnitten vorhanden ist; und eine Lauffläche,
bei welchem die Lauffläche eine oder mehrere hieran gebildete Rillen aufweist,
bei welchem, vorausgesetzt, dass SW und OD jeweils eine Querschnittsbreite und einen Außendurchmesser des Reifens darstellen, SW und OD ein Verhältnis von SW/OD ≤ 0,26 bei SW < 165 (mm) erfüllen, und SW und OD eine Verhältnisformel von OD ≥ 2,135 × SW + 282,3 bei SW ≥ 165 (mm) erfüllen,
**dadurch gekennzeichnet, dass** die Rillen jeweils eine Rillenbreite von 3 mm oder darunter besitzen.

2. Radialluftreifen für einen Personenkraftwagen nach Anspruch 1, bei welchem die Rillen eine Gesamtausdehnung p der Rillen pro Flächeneinheit auf der Lauffläche von 0,15 (mm/mm²) oder darüber und von 0,2 (mm/mm²) oder darunter aufweisen.

3. Radialluftreifen für einen Personenkraftwagen nach Anspruch 1 oder 2,
bei welchem, vorausgesetzt, dass die Lauffläche gleichmäßig in sechs Regionen in der Laufflächenbreitenrichtung aufgeteilt ist, wovon zwei Regionen in der Mitte in der Laufflächenrichtung als mittlere Abschnitte und die anderen vier Regionen auf beiden äußeren Seiten der mittleren Abschnitte in der Laufflächenbreitenrichtung als Schulterabschnitte definiert sind, die in die Laufflächenbreitenrichtung in den mittleren Abschnitt ragenden Rillen eine Gesamtausdehnung pc von mindestens 0,1 (mm/mm²) pro Flächeneinheit im mittleren Abschnitt besitzen, während die in die Reifenumfangsrichtung ragenden Rillen in den jeweiligen Schulterabschnitten eine Gesamtausdehnung ps von mindestens 0,1 (mm/mm²) pro Flächeneinheit im Schulterabschnitt besitzen.

4. Radialluftreifen für einen Personenkraftwagen nach einem der Ansprüche 1 bis 3, bei welchem das Verhältnis SW/OD 0,24 oder darunter beträgt.

5. Verfahren zur Verwendung eines Radialluftreifens für einen Personenkraftwagen, beinhaltend die Verwendung des Radialluftreifens für einen Personenkraftwagen nach einem der Ansprüche 1 bis 4 bei einem Innendruck von mindestens 250 kPa.

## Revendications

1. Bandage pneumatique radial pour véhicule à passagers, incluant : une carcasse constituée par plusieurs nappes sous forme de câblés à agencement radial et prévue toroïdalement à travers une paire de parties de talon ; et une bande de roulement, la surface de la bande de roulement comportant une ou plusieurs rainures qui y sont formées ;
dans lequel, à condition que SW et OD représentent respectivement chacun une largeur de section et un diamètre extérieur du bandage pneumatique, SW et OD satisfont un rapport SW/OD ≤ 0,26, lorsque SW < 165 (mm), et SW et OD satisfont une formule relationnelle OD ≥ 2,135 × SW + 282,3, lorsque SW ≥ 165 (mm) ;
**caractérisé en ce que** les rainures ont chacune une largeur de rainure de 3 mm ou moins.

2. Bandage pneumatique radial pour véhicule à passagers selon la revendication 1, dans lequel les rainures ont une extension totale p des rainures par unité de surface sur la surface de la bande de roulement de 0,15 (mm/mm²) ou plus et de 0,2 (mm/mm²) ou moins.

3. Bandage pneumatique pour véhicule à passagers selon les revendications 1 ou 2 ;
dans lequel, à condition que la surface de la bande de roulement est divisée de manière égale en six régions dans la direction de la largeur de la bande de roulement, dont deux régions situées au centre dans la direction de la largeur de la bande de roulement sont définies comme parties centrales, les autres quatre régions sur les deux côtés externes des parties centrales dans la direction de la largeur de la bande de roulement étant définies comme parties d'épaulement, les rainures faisant saillie dans la direction de la largeur de la bande de roulement dans la partie centrale ont une extension totale pc d'au moins 0,1 (mm/mm²) par unité de surface dans la partie centrale, tandis que les rainures faisant saillie dans la direction circonférentielle de la bande de roulement dans les parties d'épaulement respectives ont une extension totale ps d'au moins 0,1 (mm/mm²) par unité de surface dans la partie d'épaulement.

4. Bandage pneumatique radial pour véhicule à passagers selon l'une quelconque des revendications 1 à 3, dans lequel le rapport SW/OD correspond à 0,24 ou moins.

5. Procédé d'utilisation d'un bandage pneumatique radial pour un véhicule à passagers, comprenant l'utilisation du bandage pneumatique radial pour véhicule à passagers selon l'une quelconque des revendications 1 à 4, avec une pression interne d'au moins 250 kPa.
